# EUROPÄISCHE PATENTSCHRIFT

(11) **EP 2 023 023 B1**
(45) Veröffentlichungstag und Bekanntmachung des Hinweises auf die Patenterteilung: **06.01.2010**
(21) Anmeldenummer: 07015677.3
(22) Anmeldetag: 09.08.2007
(51) Int. Cl.: F16J 15/32, B25B 27/00

(54) **Montageschutzring und Dichtungsanordnung mit einem solchen**
Mounting protection ring and sealing assembly with such
Anneau de protection de montage et dispositif de joint doté de celui-ci

(43) Veröffentlichungstag der Anmeldung: 11.02.2009
(73) Patentinhaber: Carl Freudenberg KG, 69469 Weinheim (DE)
(72) Erfinder: Heldmann, Martin, 64678 Lindenfels (DE); Hintenlang, Günter, 69518 Abtsteinach (DE)

(56) Entgegenhaltungen:
- EP-A- 1 240 980
- DE-A1- 10 325 254
- GB-A- 2 133 840
- US-A- 4 218 813

## Beschreibung

### Technisches Gebiet

Die Erfindung betrifft einen Montageschutzring für einen Dichtring mit zumindest einer Dichtlippe und eine Dichtungsanordnung mit einem Montageschutzring, umfassend einen hülsenförmigen Protektorring mit einer aussenumfangsseitig angeordneten Stützfläche für die Dichtlippe und mit einem stirnseitig einerseits angeordneten, von der Stützfläche radial nach außen vorspringenden Bund und einer als Griff ausgebildeten Haltevorrichtung, wobei der Protektorring an einer Stelle seines Umfangs eine sich in axialer Richtung erstreckende Sollbruchstelle aufweist und entlang der Sollbruchstelle durch ziehen an der Haltevorrichtung durchtrennbar ist und wobei im Wesentlichen radial gegenüber der Sollbruchstelle ein sich in axialer Richtung erstreckendes Gelenk angeordnet ist, wobei der Bund im Bereich des Gelenks eine sich radial erstreckende, im Wesentlichen V-förmige Ausnehmung aufweist, mit Begrenzungsflächen, die Anschlagflächen zur Begrenzung des Öffnungswinkels des aufgebrochenen Montageschutzrings bilden.

### Stand der Technik

Ein solcher Montageschutzring und eine Dichtungsanordnung mit einem solchen Montageschutzring sind aus der DE 103 25 254 B4 bekannt. Der Protektorring ist durch einen scheibenförmigen Deckel dichtend verschlossen, um Gehäuseöffnungen zu verschließen und dadurch vor dem Eindringen von Verunreinigungen schützen zu können. Außerdem soll durch den Deckel verhindert werden, dass Schmier-oder Konservierungsmittel, die sich im Gehäuse befinden, zum Beispiel während des Transports, aus dem Gehäuse austreten und die Umgebung verunreinigen. Die Anschlagflächen des vorbekannten Montageschutzrings schließen im nicht-aufgebrochenen Zustand des Montageschutzrings einen Öffnungswinkels von 60° ein, und die Sollbruchstelle erstreckt sich über die gesamte axiale Länge des Protektorrings.

### Darstellung der Erfindung

Der Erfindung liegt die Aufgabe zugrunde, einen Montageschutzring und eine Dichtungsanordnung mit einem Montageschutzring der zuvor genannten Art derart weiterzuentwickeln, dass sich eine vereinfachte Handhabung ergibt und eine leichte Durchtrennbarkeit und dass der Montageschutzrings trotz seiner leichten Durchtrennbarkeit prozeßsicher, einfach und kostengünstig herstellbar ist.

Diese Aufgabe wird erfindungsgemäß mit den Merkmalen der Ansprüche 1 und 5 gelöst. Auf vorteilhafte Ausgestaltungen nehmen die darauf jeweils rückbezogenen Unteransprüche Bezug.

Zur Lösung der Aufgabe ist ein Montageschutzring vorgesehen, bei dem die Anschlagflächen im nicht-aufgebrochenen Zustand des Montageschutzrings einen Öffnungswinkel von zumindest 90° einschließen und/oder bei dem sich die Sollbruchstelle nur von der dem Bund abgewandten ersten Stirnseite der Stützfläche bis zum Bund erstreckt, wobei der Bund entlang seines Umfangs im Bereich der Sollbruchstelle eine sich von der zweiten Stirnseite bis zur Sollbruchstelle erstreckende schlitzförmige Durchtrennung aufweist. Dadurch, dass der Öffnungswinkels zumindest 90° aufweist, bevorzugt 90° bis 135°, weiter bevorzugt 110°, wird die Handhabung des Montageschutzrings deutlich vereinfacht. Durch den im Vergleich zum Stand der Technik größeren Öffnungswinkel kann der Montageschutzring nach der Durchtrennung des Protektorrings einfacher von dem abzudichtenden Maschinenelement, beispielsweise einer Welle, abgezogen werden, auch dann, wenn die Platzverhältnisse sehr beengt sind und der Montageschutzring über Eck abgezogen werden muss.
Die zuvor beschriebene Anordnung und Ausgestaltung von Sollbruchstelle und schlitzförmiger Durchtrennung hat den Vorteil, dass die einfache/leichte Durchtrennbarkeit des Protektorrings auch dann sichergestellt ist, wenn die Sollbruchstelle eine Materialstärke aufweist, die sich noch prozeßsicher herstellen lässt. Würde sich demgegenüber die Sollbruchstelle über die gesamte axiale Länge des Protektorrings erstrecken, wie beispielsweise im genannten Stand der Technik, müsste für die selbe einfache/leichte Durchtrennbarkeit die Materialstärke der Sollbruchstelle verringert werden. Eine Verringerung der Materialstärke ist aber nicht beliebig möglich, da bei unterschreiten eines Schwellwerts der Montageschutzring nicht mehr prozeßsicher hergestellt werden kann, weil sich bei der Formgebung die Form im Bereich der Sollbruchstelle nicht mehr zuverlässig mit Material füllt oder weil der Montageschutzring im Anschluss an seine Herstellung nicht mehr zuverlässig zerstörungsfrei entformt werden kann; bei der Entformung kann es durch die zu dünne Materialstärke passieren, dass bereits hier die Sollbruchstelle unerwünscht reißt. Die schlitzförmige Durchtrennung kompensiert demnach die etwas größere, prozesssicher herzustellende Materialstärke bezüglich der erforderlichen Kräfte, die zur Durchtrennung des Protektorrings erforderlich sind.
Sowohl der vergleichsweise große Öffnungswinkel als auch die Ausgestaltung von Sollbruchstelle und schlitzförmiger Durchtrennung tragen zur Lösung der gestellten Aufgabe bei.

Der Protektorring, die Haltevorrichtung und das Gelenk können einstückig ineinander übergehend und materialeinheitlich ausgebildet sein. Hierbei ist von Vorteil, dass die Herstellung und die Handhabung des Montageschutzrings vereinfacht sind. Der Montageschutzrings ist einfach und kostengünstig herstellbar. Die Gefahr von Montagefehlern ist durch die Einstückigkeit auf ein Minimum reduziert.

Bevorzugt besteht der Montageschutzring aus einem polymeren Werkstoff. Dadurch ist der Montageschutzring einfach und kostengünstig auch in großen Stückzahlen herstellbar. Außerdem handelt es sich um einen rostfreien Werkstoff, so dass die Stützfläche auch nach längerer Lagerung des Montageschutzrings mit darauf montierten Dichtring, z.B. in feuchter Umgebung, gleichbleibend glatt bleibt und vom Dichtring getrennt werden kann, ohne dass dessen Dichtlippe beschädigt wird.

Die Dichtungsanordnung umfasst den zuvor beschriebenen Montageschutzring, wobei der Montageschutzring und der damit verbundene Dichtring eine vormontierbare Einheit bilden und die Dichtlippe des Dichtring die Stützfläche des Protektorrings unter elastischer Vorspannung anliegend umschließt. Der Montageschutzring schützt den Dichtring während der Montage eines abzudichten Bauteils vor Beschädigungen der Dichtlippe, beispielsweise vor einer Beschädigung durch scharfkantige Übergänge oder scharfkantige Profile, wie z.B. Vielzahn-oder Keilnut-Profile einer Welle, die in ein Gehäuse montiert wird.

Die vormontierbare Einheit kann in eine abzudichtende Bohrung eines Gehäuses einpressbar sein. Zur Montage einer Welle wird diese dann durch den Protektorring des Montageschutzrings und damit durch die Bohrung in das abzudichten Gehäuse eingeschoben. Anschließend wird der Montageschutzring durch ziehen an der als Griff ausgebildeten Haltevorrichtung im Bereich der Sollbruchstelle durchtrennt, um das Gelenk aufgeklappt, maximal soweit, bis sich die als Anschlagflächen ausgebildeten Begrenzungsflächen gegenseitig berühren, und anschließend in radialer Richtung über die bereits montierte Welle abgezogen. Die vorher auf der Stützfläche abgestützte Dichtlippe des Dichtring umschließt nun die abzudichtende Oberfläche der Welle unter elastischer Vorspannung dichtend.

### Kurzbeschreibung der Zeichnung

Ausführungsbeispiele des erfindungsgemäßen Montageschutzrings und der erfindungsgemäßen Dichtungsanordnung werden nachfolgend anhand der Figuren 1 bis 3 näher beschrieben.

Diese zeigen:
- Figur 1:: ein Ausführungsbeispiel der erfindungsgemäßen Dichtungsanordnung, umfassend den Montageschutzring und den Dichtring,
- Figur 2:: den Montageschutzring aus Figur 1 als Einzelteil im herstellungsbedingten Zustand mit aufgeklappter Haltevorrichtung,
- Figur 3:: den Montageschutzring aus Figur 2 im aufgebrochenen Zustand im Anschluss an das Abziehen von einem abzudichten Maschinenelement, beispielsweise einer Welle.

### Ausführung der Erfindung

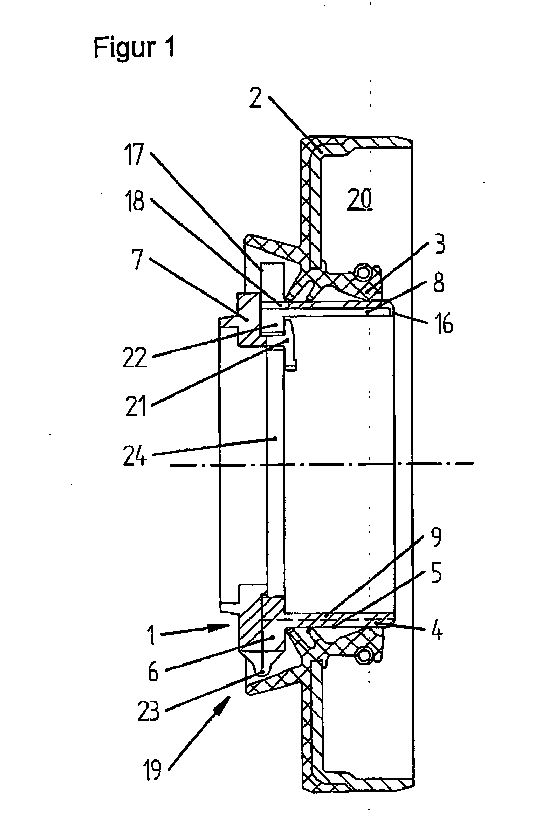

In Figur 1 ist ein Ausführungsbeispiel einer erfindungsgemäßen Dichtungsanordnung gezeigt, die einen Montageschutzring 1 und einen Dichtring 2 umfasst. Der Montageschutzring 1 und der Dichtring 2 bilden eine vormontierbare Einheit 19, wobei die Dichtlippe 3 des Dichtrings 2 die Stützfläche 5 des Protektorrings 4 unter elastischer Vorspannung anliegend umschließt. Die derart ausgebildete Einheit 19 kann in dieser Form problemlos gelagert und anschließend in eine abzudichtende Bohrung eines hier nicht dargestellten Gehäuses eingepresst werden.

Bei dem Dichtring 2 handelt es sich in diesem Beispiel um einen üblichen Radialwellendichtring, der eine dem abzudichtenden Raum 20 zugewandte, dynamisch beanspruchte Dichtlippe 3 und auf der dem abzudichtenden Raum 20 axial abgewandten Seite weitere Dichtlippen aufweist, die während der bestimmungsgemäßen Verwendung Verunreinigungen von der Dichtlippe 3 fernhalten.

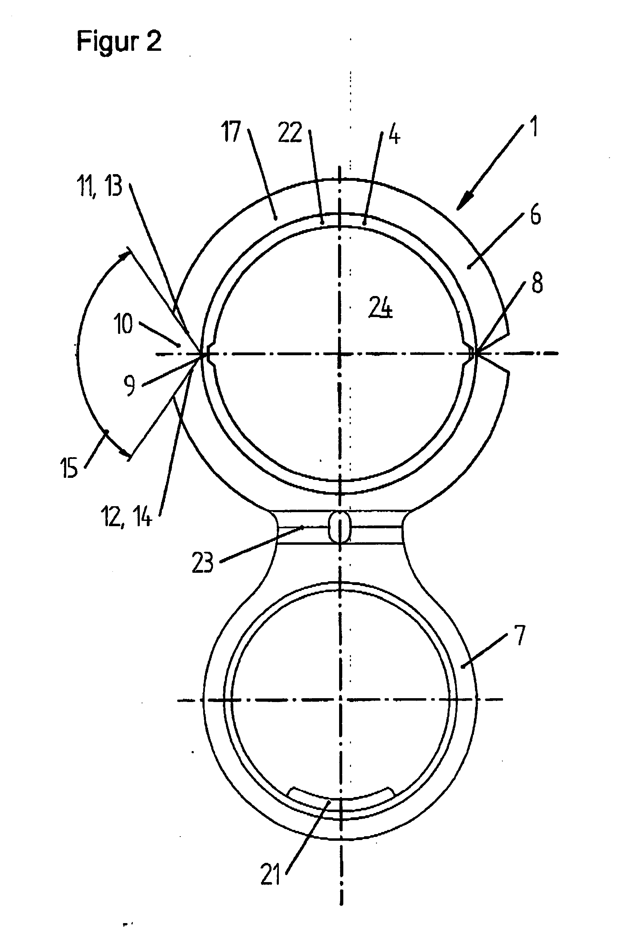

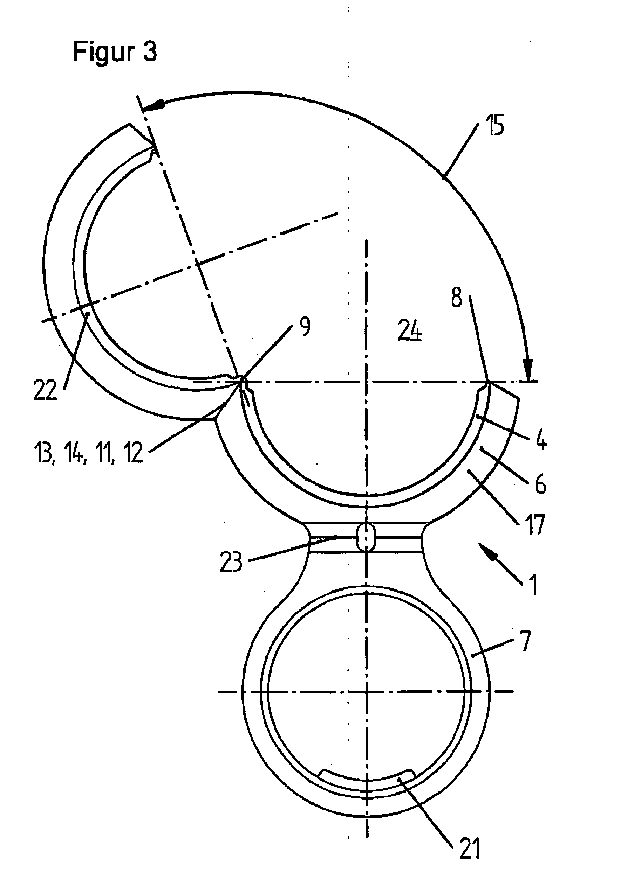

Im Anschluss an die Montage des abzudichtenden Bauteils, beispielsweise einer Welle, wird die als Griff ausgebildete Haltevorrichtung 7 mit ihrer Rastnase 21 unter dem Rasthaken 22 des Protektorrings 4 um das Filmscharnier 23 geschwenkt und dadurch heraus geklappt (vergleiche Figur 2). Anschließend wird an der herausgeklappten Haltevorrichtung 7 gezogen, bis die Sollbruchstelle 8 durchtrennt ist (vergleiche Figur 3). Danach kann der Protektorring 4 um das Gelenk 9 aufgeklappt werden, und zwar maximal soweit, bis die Begrenzungsflächen 11, 12, die Anschlagflächen 13, 14 zur Begrenzung des Öffnungswinkels 15 des aufgebrochenen Montageschutzrings 1 bilden, aneinander anliegen. Der maximale Öffnungswinkel beträgt mindestens 90°, im hier gezeigten Ausführungsbeispiel 110°, Der Montageschutzring 1 kann dann problemlos in radialer Richtung über das abzudichtende Bauteil abgezogen werden.

Der Protektorring 4 weist nicht nur die Stützfläche 5 für die Dichtlippe 3 auf, sondern auch stirnseitig einerseits, auf der dem abzudichtenden Raum 20 axial abgewandten Seite, einen von der Stützfläche 5 radial nach außen vorspringenden Bund 6. Dieser Bund 6 schützt einerseits die Dichtlippen des Dichtrings 2 und bildet andererseits eine Positionierungshilfe für die lagerichtige Montage des Dichtrings 2 auf der Stützfläche 5.
Die zentrale Öffnung 24 des Montageschutzrings 1 kann, wie im Stand der Technik gemäß DE 103 25 254 B4 offenbart, durch einen hier nicht dargestellten Deckel verschlossen sein.

In Figur 2 ist der Montageschutzring 1 aus Figur 1 in seiner herstellungsbedingten Form gezeigt. Die Anschlagflächen 13, 14 schließen im nicht aufgebrochenen Zustand des Montageschutzrings 1 einen Öffnungswinkel 15 von 110° ein. Außerdem erstreckt sich die Sollbruchstelle 8 von der dem Bund 6 axial abgewandten ersten Stirnseite 16 der Stützfläche 5 bis zum Bund 6, wobei der Bund 6 entlang seines Umfangs im Bereich der Sollbruchstelle 8 eine sich von der zweiten Stirnseite 17 bis zur Sollbruchstelle 8 erstreckende schlitzförmige Durchtrennung 18 aufweist. Die Durchtrennung 18 bewirkt, dass die Handhabung des Montageschutzrings 1 durch eine leichtere Durchtrennbarkeit der Sollbruchstelle 8 vereinfacht ist. Trotz dieser leichten Durchtrennbarkeit ist der Montageschutzring 1 prozeßsicher, einfach und kostengünstig herstellbar, weil die Sollbruchstelle 8 eine ausreichende Materialstärke für die Formgebung und Entformung des Montageschutzrings 1 aufweist.
Der gesamte Montageschutzring 1 ist einstückig ineinander übergehend und materialeinheitlich hergestellt und besteht aus einem polymeren Werkstoff. Dadurch, dass der Protektorring 4, die Haltevorrichtung 7 und das Gelenk 9, ebenso wie das Filmscharnier 23 einstückig und materialeinheitlich ausgebildet sind, ist die Gefahr von Montagefehlern auf ein Minimum reduziert.

In Figur 3 ist der Montageschutzring 1 im aufgebrochenen Zustand gezeigt. Der Montageschutzring 1 ist von der abzudichtenden Welle abgezogen, wobei die beiden Schenkel des Protektorrings 4 um das Gelenk 9 aufgeklappt sind und wobei sich die einander in Umfangsrichtung benachbart zugeordneten Anschlagflächen 13,14 anliegend berühren. Der Öffnungswinkel 15 beträgt 110°.

## Patentansprüche

1. Montageschutzring (1) für einen Dichtring (2) mit zumindest einer Dichtlippe (3), umfassend einen hülsenförmigen Protektorring (4) mit einer aussenumfangsseitig angeordneten Stützfläche (5) für die Dichtlippe (3) und mit einem stirnseitig einerseits angeordneten, von der Stützfläche (5) radial nach außen vorspringenden Bund (6) und einer als Griff ausgebildeten Haltevorrichtung (7), wobei der Protektorring (4) an einer Stelle seines Umfangs eine sich in axialer Richtung erstreckende Sollbruchstelle (8) aufweist und entlang der Sollbruchstelle (8) durch Ziehen an der Haltevorrichtung (7) durchtrennbar ist und wobei im Wesentlichen radial gegenüber der Sollbruchstelle (8) ein sich in axialer Richtung erstreckendes Gelenk (9) angeordnet ist, wobei der Bund (6) im Bereich des Gelenks (9) eine sich radial erstreckende, im Wesentlichen V-förmige Ausnehmung (10) aufweist, mit Begrenzungsflächen (11,12), die Anschlagflächen (13,14) zur Begrenzung des Öffnungswinkels (15) des aufgebrochenen Montageschutzrings (1) bilden, **dadurch gekennzeichnet, dass** die Anschlagflächen (13,14) im nicht-aufgebrochenen Zustand des Montageschutzrings (1) einen Öffnungswinkel (15) von zumindest 90° einschließen und/oder dass sich die Sollbruchstelle (8) nur von der dem Bund (6) abgewandten ersten Stirnseite (16) der Stützfläche (5) bis zum Bund (6) erstreckt, wobei der Bund (6) entlang seines Umfangs im Bereich der Sollbruchstelle (8) eine sich von der zweiten Stirnseite (17) bis zur Sollbruchstelle (18) erstreckende schlitzförmige Durchtrennung (18) aufweist.

2. Montageschutzring (1) nach Anspruch 1, **dadurch gekennzeichnet, dass** der Öffnungswinkel (15) 90° bis 135° beträgt.

3. Montageschutzring (1) nach einem der Ansprüche 1 oder 2, **dadurch gekennzeichnet, dass** der Protektorring (4), die Haltevorrichtung (7) und das Gelenk (9) einstückig ineinander übergehend und materialeinheitlich ausgebildet sind.

4. Montageschutzring (1) nach einem der Ansprüche 1 bis 3, **dadurch gekennzeichnet, dass** er aus einem polymeren Werkstoff besteht.

5. Dichtungsanordnung, umfassend einen Montageschutzring (1) nach einem der Ansprüche 1 bis 4 , wobei der Montageschutzring (1) und ein damit verbundener Dichtring (2) eine vormontierbare Einheit (19) bilden und die Dichtlippe (3) des Dichtrings (2) die Stützfläche (5) des Protektorrings (4) unter elastischer Vorspannung anliegend umschließt.

6. Dichtungsanordnung nach Anspruch 5, **dadurch gekennzeichnet, dass** die vormontierbare Einheit (19) in eine abzudichtende Bohrung eines Gehäuses einpressbar ist.

## Claims

1. Mounting protection ring (1) for a sealing ring (2) with at least one sealing lip (3), comprising a sleeve-shaped protector ring (4) with an outer-circumferentially arranged supporting surface (5) for the sealing lip (3) and with a rim (6) arranged on the end face on one side and projecting radially outwards from the supporting surface (5), and with a holding device (7) designed as a grip, the protector ring (4) having at a point on its circumference an axially extending predetermined breaking point (8) and being severable along the predetermined breaking point (8) by a pull on the holding device (7), and an axially extending joint (9) being arranged essentially radially opposite the predetermined breaking point (8), the rim (6) having in the region of the joint (9) a radially extending essentially V-shaped recess (10) with boundary surfaces (11, 12) which form stop surfaces (13, 14) for limiting the opening angle (15) of the broken-open mounting protection ring (1), **characterized in that** the stop surfaces (13, 14) form an opening angle (15) of at least 90° in the non-broken-open state of the mounting protection ring (1), and/or **in that** the predetermined breaking point (8) extends only from the first end face (16), facing away from the rim (6), on the supporting surface (5) as far as the rim (6), the rim (6) having along its circumference, in the region of the predetermined breaking point (8), a slit-shaped perforation (18) extending from the second end face (17) as far as the predetermined breaking point (18).

2. Mounting protection ring (1) according to Claim 1, **characterized in that** the opening angle (15) is 90° to 135°.

3. Mounting protection ring (1) according to either one of Claims 1 and 2, **characterized in that** the protector ring (4), the holding device (7) and the joint (9) are produced so as to merge one into the other in one piece and in a materially unitary manner.

4. Mounting protection ring (1) according to one of Claims 1 to 3, **characterized in that** it consists of a polymeric material.

5. Sealing arrangement, comprising a mounting protection ring (1) according to one of Claims 1 to 4, the mounting protection ring (1) and a sealing ring (2) connected to it forming a premountable unit (19), and the sealing lip (3) of the sealing ring (2) surrounding the support surface (5) of the protector ring (4) so as to come to bear under elastic prestress.

6. Sealing arrangement according to Claim 5, **characterized in that** the premountable unit (19) can be pressed into a housing bore to be sealed off.

## Revendications

1. Anneau de protection de montage (1) pour une bague d'étanchéité (2) comportant au moins une lèvre d'étanchéité (3), comprenant un anneau protecteur (4) en forme de douille avec une face d'appui (5) disposée du côté périphérique extérieur pour la lèvre d'étanchéité (3) et avec un bourrelet (6) disposé frontalement d'un côté et saillant radialement vers l'extérieur sur la face d'appui (5), et avec un dispositif de retenue (7) se présentant sous forme de rebord, dans lequel l'anneau protecteur (4) présente en un endroit de sa périphérie une zone de rupture théorique (8) et est séparable le long de la zone de rupture théorique (8) par traction sur le dispositif de retenue (7) et dans lequel une articulation (9) s'étendant en direction axiale est disposée en position essentiellement radiale en face de la zone de rupture théorique (8), dans lequel le bourrelet (6) présente dans la région de l'articulation (9) un évidement (10) essentiellement en forme de V s'étendant en direction radiale, avec des faces de délimitation (11, 12), qui forment des faces de butée (13, 14) pour la limitation de l'angle d'ouverture (15) de l'anneau de protection de montage (1) brisé, **caractérisé en ce que** les faces de butée (13, 14) forment, à l'état non brisé de l'anneau de protection de montage (1), un angle d'ouverture (15) d'au moins 90° et/ou **en ce que** la zone de rupture théorique (8) ne s'étend que du premier côté frontal (16) de la face d'appui (5) situé à l'opposé du bourrelet (6) jusqu'au bourrelet (6), dans lequel le bourrelet (6) présente le long de sa périphérie, dans la région de la zone de rupture théorique (8), une entaille en forme de fente (18) s'étendant du deuxième côté frontal (17) jusqu'à la zone de rupture théorique (8).

2. Anneau de protection de montage (1) selon la revendication 1, **caractérisé en ce que** l'angle d'ouverture (15) vaut de 90° à 135°.

3. Anneau de protection de montage (1) selon l'une ou l'autre des revendications 1 ou 2, **caractérisé en ce que** l'anneau protecteur (4), le dispositif de retenue (7) et l'articulation (9) sont réalisés d'une seule pièce, intégrés les uns dans les autres et en une matière unique.

4. Anneau de protection de montage (1) selon l'une quelconque des revendications 1 à 3, **caractérisé en ce qu'**il est constitué d'un matériau polymère.

5. Système d'étanchéité, comprenant un anneau de protection de montage (1) selon l'une quelconque des revendications 1 à 4, dans lequel l'anneau de protection de montage (1) et une bague d'étanchéité (2) assemblée à celui-ci forment une unité (19) apte à être préassemblée et la lèvre d'étanchéité (3) de la bague d'étanchéité (2) entoure la face d'appui (5) de l'anneau protecteur (4) par application sous précontrainte élastique.

6. Système d'étanchéité selon la revendication 5, **caractérisé en ce que** l'unité (19) apte à être préassemblée peut être pressée dans un alésage à rendre étanche d'un boîtier.
